# EUROPEAN PATENT APPLICATION

(11) **EP 1 419 932 A1**
(43) Date of publication of application: **19.05.2004**
(21) Application number: 03104173.4
(22) Date of filing: 13.11.2003
(51) Int. Cl.: B60Q 1/14

(54) **Erroneous operation prevention structure of combination switch**

(30) Priority: 13.11.2002 JP 2002329707
(71) Applicant: YAZAKI CORPORATION, Minato-ku Tokyo 108 (JP)
(72) Inventor: Mizuno, Yoshiyuki, c/o Yazaki Parts Co., Ltd., Haibara-gun (JP)
(74) Representative: Brunner, Michael John

(57) **Abstract**

An erroneous operation prevention structure of a combination switch (10) includes a shaft, fixed to a steering column, a first moving knob (13), angularly moved relative to the shaft to switch a first circuit, a second moving knob (14), disposed adjacent to the first moving knob (13) coaxially, and angularly moved relative to the shaft to switch a second circuit, and an impingement prevention member (19), provided between the first moving knob (13) and the second moving knob (14). The impingement prevention member (19) prevents an axial movement of the first moving knob (13) toward the second moving knob (14).

## Description

### BACKGROUND OF THE INVENTION

This invention relates to an erroneous operation prevention structure of a combination switch which is mounted on a steering column of a vehicle, and has change-over switches contained in knobs.

A related combination switch as disclosed in JP-A-10-233144, especially pages 2 and 3 and Fig. 2 thereof, is generally known, and a combination switch, having a plurality of moving knobs (for example, a lighting knob, fog lamp knob, etc.) has been proposed in JP-A-11-312440, especially, pages 2 and 3 and Fig. 1 thereof. Such a combination switch, having three moving knobs, will now be described as one example.

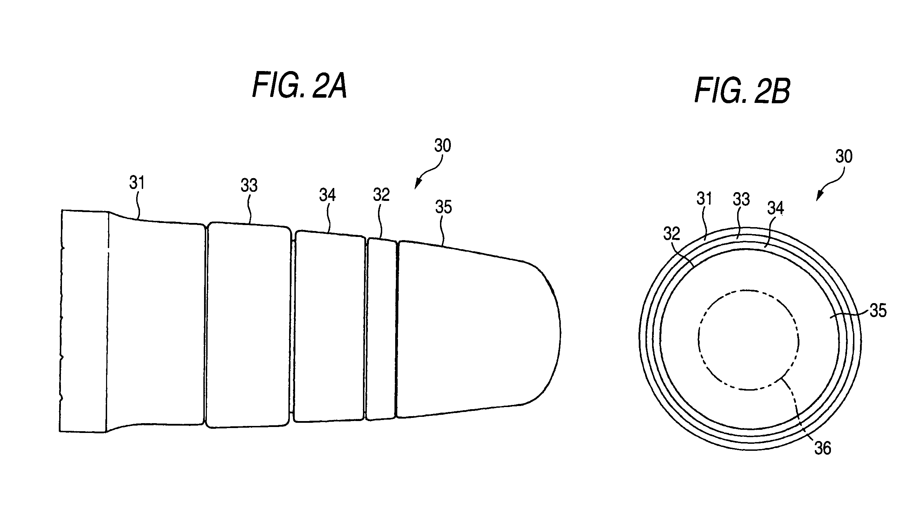

As shown in Fig. 2A, the combination switch 30 includes first and second fixed knobs 31 and 32, and first, second and third moving knobs 33, 34 and 35. The first and second fixed knobs 31 and 32 are fixed to a steering column.

The first moving knob 33 is disposed adjacent to the right side (in the drawings) of the first fixed knob 31, with a small gap formed therebetween, and this first moving knob 33 is angularly moved to be switched between a stop position (OFF) and an operative position (ON), thereby controlling the operation of a rear wiper.

The second moving knob 34 is disposed adjacent to the right side (in the drawings) of the first moving knob 33, with a small gap formed therebetween, and this second moving knob 34 is angularly moved relative to the second fixed knob 32 to set a desired intermittent stop time of a front wiper between the shortest time and the longest time when the third moving knob 35 is held in an intermittent position.

The third moving knob 35 is disposed to the right side (in the drawings) of the second fixed knob 32, with a small gap formed therebetween, and this third moving knob 35 is angularly moved relative to the second fixed knob 32 to be switched between a stop position (OFF), the intermittent position (INT), a low speed position (LO) and a high speed position (HI), thereby controlling the operation of the front wiper.

In the combination switch 30, the first fixed knob 31, the first moving knob 33, the second moving knob 34, the second fixed knob 32 and the third moving knob 35 are coaxially mounted on a knob support member 36 (described later), and are arranged in this order from the rear side of this combination switch as shown in Fig. 2B.

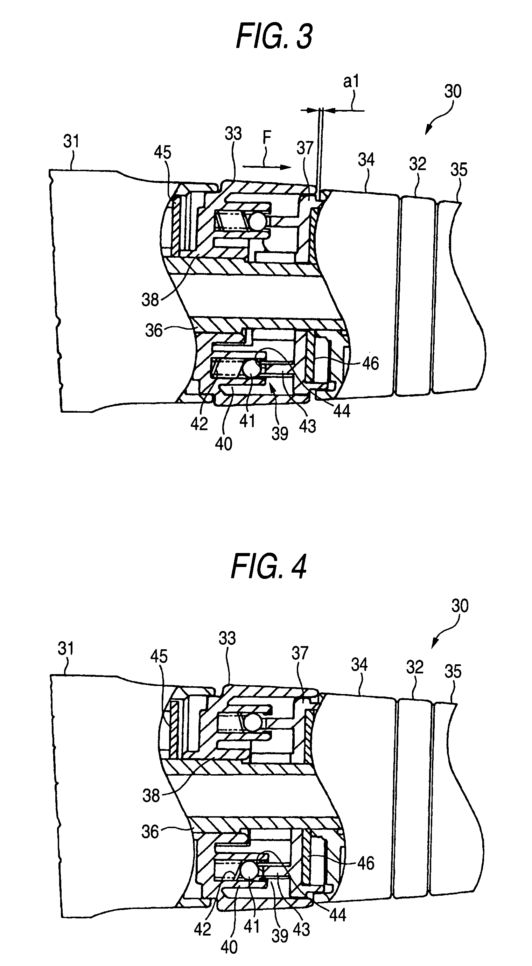

As shown in Fig. 3, the combination switch 30 has the knob support member 36 of a tubular shape mounted therein and extending along the axis thereof.

The first moving knob 33 and an internal fixed contact plate member 37 are mounted on an outer peripheral surface of the knob support member 36. The first moving knob 33 has a cylindrical shape, and includes an angular movement support portion 38 of a cylindrical shape formed at its inner peripheral portion, and this angular movement support portion 38 is angularly movably supported (or fitted) on the outer peripheral surface of the knob support member 36. The internal fixed contact plate member 37 is fixed to the knob support member 36.

Angular movement-click unit 39 is provided between the internal fixed contact plate member 37 and that side of the first moving knob 33 facing the second moving knob 34.

The angular movement-click unit 39 includes ball holders 40 formed on the first moving knob 33, balls 42 received respectively in the ball holders 40, return springs 42 received respectively in the ball holders 40, and a ball abutment plate portion 43 formed on the internal fixed contact plate member 37.

The plurality of ball holders 40 are formed in a projected manner on the first moving knob 33, and are spaced from one another in a direction of the circumference of the first moving knob 33. Each ball holder 40 has a cylindrical shape with a closed bottom, and that end of the ball holder 40, facing the internal fixed contact plate member 37, is open. The ball holder 40 receives the return spring 42 therein, and a resilient force, stored in the return spring 42, urges the ball 41 toward the ball abutment plate portion 43 of the internal fixed contact plate member 37.

The ball abutment plate portion 43 of the internal fixed contact plate member 37 has a cylindrical shape corresponding to the arrangement of the ball holders 40, and mountain portions (not shown) and valley portions 44 for producing a click are formed at a distal end of the ball abutment plate portion 43, and are arranged over a predetermined range in the circumferential direction. Here, the predetermined range corresponds to the stroke of angular movement of the first moving knob 33.

A moving contact portion (not shown), including a plurality of contactors, is provided at that side of the first moving knob 33 facing the first fixed knob 31, and in accordance with the angular movement of the first moving knob 33, this moving contact portion is brought into and out of electrical contact with a fixed contact plate 45 which includes a plurality of contact plates, and is provided at an end portion of the first fixed knob 31.

When the first moving knob 33 is angularly moved to be switched into the operative position and the stop position with a click feeling produced by the click-producing unit 39, the contactors of the moving contact portion are brought into and out of electrical contact with the contact plates of the fixed contact plate 45. With this construction, a rear wiper control circuit, electrically connected to the fixed contact plate 45, is deactivated in the stop position, and is activated in the operative position.

A fixed contact plate 46 of an intermittent stop time control circuit is provided at that side of the internal fixed contact plate member 37 facing the second moving knob 34, and when the second moving knob 34 is angularly moved for the switching operation, the fixed contact plate 46 is brought into and out of contact with associated contacts.

In the above related combination switch 30, any fixed knob is not provided between the first moving knob 33 and the second moving knob 34. This construction is adopted so that the overall length will not increase too much when many knobs are required to be provided on the combination switch.

However, the front wiper is operated, with the intermittent stop time set by angularly moving the second moving knob 34 into the desired position, and in this condition when the rear wiper is also to be operated by angularly moving only the first moving knob 33, a force (indicated by arrow F in Fig. 3), pressing the first moving knob 33 toward the second moving knob 34, can be produced as shown in Fig. 3. Although a small gap a1 is provided between the first moving knob 33 and the second moving knob 34, the side surface of the first moving knob 33 impinges on the side surface of the second moving knob 34 because of this pressing force F so that friction develops between the two knobs. As a result, the second moving knob 34 is angularly moved together with the first moving knob 33, thus causing an erroneous operation. Therefore, the front wiper is operated in a different mode from that intended by the person who has manipulated the knob, so that the person may have a distrust of the combination switch.

### SUMMARY OF THE INVENTION

It is therefore an object of the present invention to provide an erroneous operation prevention structure of a combination switch in which a positive switching operation can be effected without erroneously operating a moving knob.

In order to achieve the above object, according to the present invention, there is provided an erroneous operation prevention structure of a combination switch, comprising:
a shaft, fixed to a steering column;
a first moving knob, angularly moved relative to the shaft to switch a first circuit;
a second moving knob, disposed adjacent to the first moving knob coaxially, and angularly moved relative to the shaft to switch a second circuit; and
an impingement prevention member, provided between the first moving knob and the second moving knob,
wherein the impingement prevention member prevents an axial movement of the first moving knob toward the second moving knob.

In the above configuration, when the first moving knob is operated to be angularly moved, the axial movement of the first moving knob toward the second moving knob is prevented by the impingement prevention member.

Therefore, when the first moving knob is operated to be angularly moved, the first moving knob will not impinge on the second moving knob because of the provision of the impingement prevention mechanism, and the first moving knob can be angularly moved alone for the switching operation. Therefore, the positive switching operation can be carried out without erroneously operating the moving knobs.

According to the present invention, there is also provided an erroneous operation prevention structure of a combination switch, comprising:
a shaft, fixed to a steering column;
a first moving knob, angularly moved relative to the shaft to switch a first circuit;
a second moving knob, disposed adjacent to the first moving knob coaxially, and angularly moved relative to the shaft to switch a second circuit; and
an internal fixed contact plate member, disposed between the first moving knob and the second moving knob, and fixed to the shaft; and
an impingement prevention member, provided at one of the internal fixed contact plate member and the first moving knob,
wherein the impingement prevention member prevents an axial movement of the first moving knob toward the second moving knob.

In the above configuration, when the first moving knob is operated to be angularly moved, the axial movement of the first moving knob toward the second moving knob is prevented by the impingement prevention member.

Therefore, when the first moving knob is operated to be angularly moved, the first moving knob will not impinge on the second moving knob because of the provision of the impingement prevention mechanism at the one of the internal fixed contact plate member and the first moving knob, and the first moving knob can be angularly moved alone for the switching operation. Therefore, the positive switching operation can be carried out without erroneously operating the moving knobs.

Preferably, the impingement prevention member restricts an amount of the axial movement of the first moving knob toward the second moving knob so as to become smaller than a gap between the first moving knob and the second moving knob.

In the above configuration, the amount of axial movement of the first moving knob toward the second moving knob (which axial movement is allowed by the impingement prevention member), is smaller than the gap between the first moving knob and the second moving knob.

Therefore, when the first moving knob is operated to be angularly moved, the first moving knob is angularly moved while allowed to move in the amount which is smaller than the gap between the first and second moving knobs. Therefore, the first moving knob will not impinge on the second moving knob, and can be angularly moved alone for the switching operation. Therefore, the positive switching operation can be carried out without erroneously operating the moving knobs.

Here, it is preferable that, the impingement prevention member includes a projection formed at one of the internal fixed contact plate member and the first moving knob. The projection is brought into abutting engagement with the other of the internal fixed contact plate member and the first moving knob when the first moving knob moves axially toward the second moving knob.

In the above configuration, when the first moving knob is axially moved toward the second moving knob, the projection, formed at the one of the internal fixed contact plate member and the first moving knob, abuts against the other, thereby preventing the impingement of the first moving knob on the second moving knob.

The projection is formed on the one of the internal fixed contact plate member and the first moving knob simultaneously when the one of the internal fixed contact plate member and the first moving knob is produced. Therefore, the projection is formed merely by slightly changing a related mold. Therefore, the time and labor, required for producing the combination switch, will not increase, and the moving knobs will not be erroneously operated, and the positive switching operation can be carried out.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a cross-sectional view of an important portion of one preferred embodiment of an erroneous operation prevention structure of a combination switch of the invention;
Fig. 2A is a side-elevational view of a related combination switch, and Fig. 2B is a front-elevational view of the combination switch of Fig. 2A;
Fig. 3 is a cross-sectional view of an important portion of the related switch; and
Fig. 4 is a cross-sectional view of the important portion of the combination switch of Fig. 3, showing a condition in which an erroneous operation occurs.

### DETAILED DESCRIPTION OF THE PREFERRED EMBODIMENTS

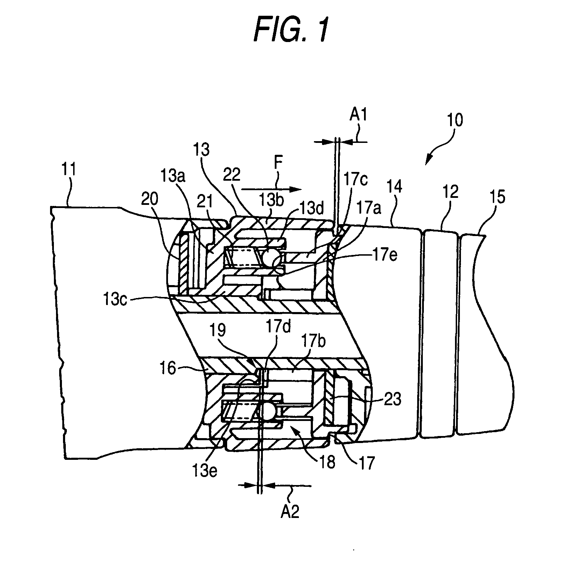

One preferred embodiment of an erroneous operation prevention structure of a combination switch of the present invention will now be described in detail with reference to Fig. 1. Fig. 1 is a cross-sectional view of an important portion of one preferred embodiment of the erroneous operation prevention structure of the combination switch of the invention.

As shown in Fig. 1, the combination switch 10 of this embodiment includes first and second fixed knobs 11 and 12, first, second and third moving knobs 13, 14 and 15, a knob support member (shaft) 16, an internal fixed contact plate member 17, an angular movement-click mechanism 18, and an impingement prevention mechanism 19 forming the erroneous operation prevention structure.

The first fixed knob 11 has a cylindrical shape, and is fixedly mounted at its central portion on the knob support member 16. The knob support member 16 has a cylindrical shape, and a shaft (not shown), fixed to a steering column, is passed through the knob support member 16, and the knob support member 16 is fixed to this shaft.

A first fixed contact plate 20 is fixed to a distal end of the first fixed knob 11, and this first fixed contact plate 20 has contact plates for arbitrarily setting an intermittent stop time in an intermittent stop time control circuit (second circuit) by angular movement (switching movement) of the second moving knob 14.

The second fixed knob 12 is disposed between the second moving knob 14 and the third moving knob 15, with a small gap formed between it and each of the second and third moving knobs. Like the first fixed knob 11, the second fixed knob 12 is fixed to the knob support member 16.

The first moving knob 13 is disposed adjacent to the right side (in the drawing) of the first fixed knob 11 with a small gap formed therebetween, and this first moving knob 13 is disposed adjacent to the left side (in the drawing) of the second moving knob 14 with a small gap A1 formed therebetween.

The first moving knob 13 includes a body portion 13a, an operating portion 13b formed at an outer peripheral portion of the body portion 13a, a tubular portion 13c formed at an inner peripheral portion of the body portion 13a, and ball holders 13d forming part of the angular movement-click mechanism 18.

The body portion 13a has a disk-shape, and a moving contact portion (not shown) is provided at that side of the body portion 13a facing the first fixed knob 11, and this moving contact portion has contactors which can be brought into and out of electrical contact with the contact plates of the first fixed contact plate 20 fixed to the first fixed knob 11.

The operating portion 13b is a portion which is pushed by a person's hand when angularly moving the first moving knob 13 for the switching operation. A distal end portion of the operating portion 13b is disposed on an outer peripheral portion of the internal fixed contact plate member 17. The operating portion 13b may have a plate-like projecting portion which projects in the axial direction, and extends over part of the circumference.

The tubular portion 13c is rotatably (angularly-movably) fitted on the knob support member 16, and an axial distal end of this tubular portion 13c serves as an abutment portion 13e of the impingement prevention mechanism 19 for abutting against the internal fixed contact plate member 17.

The plurality of ball holders 13d are formed in a projected manner on the body portion 13a, and are spaced from one another in the circumferential direction. Each ball holder 13d has a cylindrical shape with a closed bottom, and that end of the ball holder 13d, facing the internal fixed contact plate member 17, is open. A return spring 21 and a ball 22 which form part of the angular movement-click mechanism 18 are received in each of the ball holders 13d. Each ball 22 is urged toward the internal fixed contact plate member 17 by a resilient force stored in the return spring 21.

The first moving knob 13 is angularly moved relative to the first fixed knob 11 to be switched between a stop position (OFF) and an operative position (ON), thereby deactivating and activating a rear wiper control circuit (first circuit), thus controlling the operation of a rear wiper.

The internal fixed contact plate member 17 has a cylindrical shape, and is smaller in outer diameter than the first moving knob 13. The internal fixed contact plate member 17 includes a body portion 17a, a tubular portion 17b formed at an inner peripheral portion of the body portion 17a, a ball abutment plate portion 17c which forms part of the angular movement-click mechanism 18, and a rib-like projection 17d which forms part of the impingement prevention mechanism 19.

The body portion 17a has a disk-shape, and the outer peripheral edge of this body portion 17a supports the distal end portion of the operating portion 13b of the first moving knob 13 in a manner to allow the angular movement of the first moving knob 13. A second fixed contact plate 23, having contact plates, is fixed to that side of the body portion 17a facing the second moving knob 14, and contactors, provided at the second moving knob 14, are brought into and out of electrical contact with the contact plates of the second fixed contact plate 23. The tubular portion 17b is fitted on the knob support member 16.

The ball abutment plate portion 17c projects from the body portion 17a, and has a tubular shape corresponding to the arrangement of the ball holders 13d of the first moving knob 13. Mountain portions (not shown) and valley portions 17e for producing a click feeling are formed at a distal end of the ball abutment plate portion 17c, and are arranged over a predetermined range corresponding to the stroke of angular movement of the first moving knob 13 in the circumferential direction.

The rib-like projection 17d is formed at a distal end of the tubular portion 17b, and corresponds to the abutment portion 13e in the axial direction, the rib-like projection 17d being in the form of a small projection. The abutment portion 13e is formed on the tubular portion 13c of the first moving knob 13. A clearance A2 is formed between the rib-like projection 17d and the abutment portion 13e, and this clearance A2 is smaller than the gap A1 between the first moving knob 13 and the second moving knob 14.

The rib-like projection 17d is formed on the internal fixed contact plate member 17 simultaneously when this internal fixed contact plate member 17 is produced. The rib-like projection 17d may be formed on the tubular portion 17b over the entire circumference thereof. Alternatively, a plurality of rib-like projections 17 may be formed at equal intervals in the circumferential direction.

As described above, the angular movement-click mechanism 18 includes the ball holders 13d formed at the first moving knob 13, the return springs 21, the balls 22, and the ball abutment plate portion 17c formed at the internal fixed contact plate member 17. When an angularly-moving force is applied to the first moving knob 13, each ball 22 slides over the mountain portion, and is retained in the valley portion 17e, and the positions of retaining of the ball 22 in the respective valley portions 17e are the stop position (OFF) and the operative position (ON) of the first moving knob 13, respectively. With this construction, the first moving knob 13 is switched into each position in a stepping manner with a click feeling.

As described above, the impingement prevention mechanism 19 includes the abutment portion 13e formed at the first moving knob 13, and the rib-like projection 17d formed at the internal fixed contact plate member 17. When an angularly-moving force is applied to the first moving knob 13, a pressing force F (as indicated by an arrow in Fig. 1) acts on the first moving knob 13.

Therefore, even when the first moving knob 13 moves axially toward the second moving knob 14, the abutment portion 13e abuts against the rib-like projection 17d, thereby preventing the operating portion 13b of the first moving knob 13 from impinging on the second moving knob 14. Therefore, the first moving knob 13 can be angularly moved alone for the switching operation without impinging on the second moving knob 14.

The second moving knob 14 is disposed adjacent to the right side (in the drawing) of the first moving knob 13, with the small gap A1 formed therebetween, and this second moving knob 14 is angularly moved relative to the second fixed knob 12 when the third moving knob 15 is held in the intermittent position. As a result, a moving contact portion (not shown), which is provided at the second moving knob 14, and has the contactors, is brought into and out of electrical contact with the contact plates of the second fixed contact plate 23 fixed to the internal fixed contact plate member 17, thereby setting a desired intermittent stop time of the front wiper between the shortest time and the longest time.

The third moving knob 15 is disposed to the right side (in the drawing) of the second fixed knob 12, with a small gap formed therebetween, and this third moving knob 15 is angularly moved relative to the second fixed knob 12 to be switched between a stop position (OFF), the intermittent position (INT), a low speed position (LO) and a high speed position (HI), thereby controlling the operation of the front wiper.

In the erroneous operation prevention structure of the combination switch 10 of this embodiment, when the first moving knob 13 is operated to be angularly moved, the axial movement of the first moving knob 13 toward the second moving knob 14 is prevented by the impingement prevention mechanism 19.

Therefore, when the first moving knob 13 is operated to be angularly moved, the first moving knob 13 will not impinge on the second moving knob 14 because of the provision of the impingement prevention mechanism 19, and the first moving knob 13 can be angularly moved alone for the switching operation. Therefore, the positive switching operation can be carried out without erroneously operating the moving knob.

In the erroneous operation prevention structure of the combination switch 10 of this embodiment, when the first moving knob 13 is operated to be angularly moved, the axial movement of the first moving knob 13 toward the second moving knob 14 is prevented by the impingement prevention mechanism 19 provided at the internal fixed contact plate member 17.

Therefore, when the first moving knob 13 is operated to be angularly moved, the first moving knob 13 will not impinge on the second moving knob 14 because of the provision of the impingement prevention mechanism 19 provided at the internal fixed contact plate member 17, and the first moving knob 13 can be angularly moved alone for the switching operation. Therefore, the positive switching operation can be carried out without erroneously operating the moving knob.

In the erroneous operation prevention structure of the combination switch 10 of this embodiment, the amount of axial movement of the first moving knob 13 toward the second moving knob 14 which axial movement is allowed by the impingement prevention mechanism 19 is smaller than the gap A1 between the first moving knob 13 and the second moving knob 14.

Therefore, when the first moving knob 13 is operated to be angularly moved, the first moving knob 13 is angularly moved while allowed to move in the amount A2 which is smaller than the gap A1 between the first and second moving knobs 13 and 14. Therefore, the first moving knob 13 will not impinge on the second moving knob 14, and can be angularly moved alone for the switching operation. Therefore, the positive switching operation can be carried out without erroneously operating the moving knob.

In the erroneous operation prevention structure of the combination switch 10 of this embodiment, when the first moving knob 13 is axially moved toward the second moving knob 14, the rib-like projection 17d, formed at the internal fixed contact plate member 17, abuts against the abutment portion 13e of the first moving knob 13, thereby preventing the impingement of the first moving knob 13 on the second moving knob 14.

The rib-like projection 17d is formed on the internal fixed contact plate member 17 simultaneously when this internal fixed contact plate member 17 is produced. Therefore, the rib-like projection 17d is formed merely by slightly changing a related mold. Therefore, the time and labor, required for producing the combination switch, will not increase, and the moving knob will not be erroneously operated, and the positive switching operation can be carried out.

The erroneous operation prevention structure of the combination switch of the invention is not limited to the above embodiment, and suitable modifications and improvements can be made. For example, the rib-like projection may be formed at the end portion of the first moving knob so as to abut against the end portion of the tubular portion of the internal fixed contact plate member.

In addition to the rib-like projection for preventing the axial movement of the first moving knob toward the second moving knob, an impingement prevention mechanism for preventing the axial movement of the second moving knob toward the first moving knob may be provided. With this construction, the erroneous operation of the first moving knob is prevented when changing the intermittent stop time of the front wiper by the second moving knob.

The impingement prevention mechanism is not limited to the rib-like projection, and for example an O-ring-like elastic member, having a small resilient force, may be mounted on the end portion of the tubular portion of the internal fixed contact plate member. In this case, a clearance which is smaller than the gap between the first moving knob and the second moving knob is formed between the elastic member and the abutment portion.

## Claims

1. An erroneous operation prevention structure of a combination switch, comprising:
a shaft, fixed to a steering column;
a first moving knob, angularly moved relative to the shaft to switch a first circuit;
a second moving knob, disposed adjacent to the first moving knob coaxially, and angularly moved relative to the shaft to switch a second circuit; and
an impingement prevention member, provided between the first moving knob and the second moving knob,
wherein the impingement prevention member prevents an axial movement of the first moving knob toward the second moving knob.

2. An erroneous operation prevention structure of a combination switch, comprising:
a shaft, fixed to a steering column;
a first moving knob, angularly moved relative to the shaft to switch a first circuit;
a second moving knob, disposed adjacent to the first moving knob coaxially, and angularly moved relative to the shaft to switch a second circuit; and
an internal fixed contact plate member, disposed between the first moving knob and the second moving knob, and fixed to the shaft; and
an impingement prevention member, provided at one of the internal fixed contact plate member and the first moving knob,
wherein the impingement prevention member prevents an axial movement of the first moving knob toward the second moving knob.

3. The erroneous operation prevention structure as set forth in claims 1 or 2, wherein the impingement prevention member restricts an amount of the axial movement of the first moving knob toward the second moving knob so as to become smaller than a gap between the first moving knob and the second moving knob.

4. The erroneous operation prevention structure as set forth in claim 2, wherein the impingement prevention member includes a projection formed at one of the internal fixed contact plate member and the first moving knob; and
wherein the projection is brought into abutting engagement with the other of the internal fixed contact plate member and the first moving knob when the first moving knob moves axially toward the second moving knob.
